# EUROPEAN PATENT APPLICATION

(11) **EP 2 826 641 A1**
(43) Date of publication of application: **21.01.2015**
(21) Application number: 14175956.3
(22) Date of filing: 07.07.2014
(51) Int. Cl.: B60C 9/04, B60C 9/08

(54) **Pneumatic tire having a single carcass ply reinforced with polyester cords**

(30) Priority: 17.07.2013 US 201313944086
(71) Applicant: The Goodyear Tire & Rubber Company, Akron, Ohio 44316 (US)
(72) Inventor: Beha, Daniel Ray, Akron, OH 44313 (US); King, Kelly Sue, Wadsworth, OH 44281 (US); Weiler, Christopher John, Canal Fulton, OH 44614 (US); Till, Douglas Andrew, Akron, OH 44313 (US)
(74) Representative: Kutsch, Bernd

(57) **Abstract**

A pneumatic tire comprising a pair of axially spaced apart annular bead cores (11) and having a single carcass ply (12) is disclosed; the single carcass ply (12) is reinforced with polyester cords, the polyester cords of the construction 2000-2400/1/2, a number of turns per 2.54 cm (tpi) in a range of from 7 to 10, a construction of 1/2, and cord count i.e. the number of ends per 2.54 cm (epi) in a range of from 20 to 32.

## Description

### Field of the Present Invention

The present invention relates to a pneumatic tire having a single carcass reinforced with polyester cords. The tire may have a high ending ply turnup and a locked bead construction.

### Background of the Invention

Prior art pneumatic tires often include a carcass ply having a main portion that extends between both bead cores of the tire and turnup portions that are anchored around each bead core. The radially outer edges of the turnup portions of the carcass ply may be disposed radially outward of the bead cores a minimal distance and are in contact with the main portion of the carcass ply. Suitable elastomeric materials may surround the bead core, carcass ply and other elastomeric components to complete the bead portion of the tire. A clamping member may be used comprising a strip of side-by-side cords of a heat shrinkable material embedded in a suitable elastomeric substance having a permanent thermal shrinkage of at least 2 percent. This strip of cords may be extended from a location radially and axially inward of the bead core to a location radially outward of the bead core with no filler strip or apex disposed between the main portion and turnup portion of the carcass ply. The heat shrinkable material may for instance be a 1260/2 Nylon 6,6 having a permanent thermal shrinkage of 4 percent.

It is a continual overriding goal to simplify the construction and reduce the expense of building tires and yet improve the durability, handling and rolling resistance of the pneumatic tire.

Other prior art pneumatic tires have a pair of axially spaced annular bead cores and a single carcass ply which is folded each bead core. Each bead core includes a plurality of wraps of a single metallic filament. The single carcass ply is reinforced with parallel metallic cords composed of at least one filament having a tensile strength of at least (-2000 x D + 4400 MPa) x 95%, where D is the filament diameter in millimeters. The single carcass ply has a main portion that extends between the bead cores and turnup portions that are folded around the bead cores. A radially outer edge of each turnup portion is in contact with the main portion of the carcass ply and extends to an end point 12.7 mm to 101.6 mm radially outward of the bead core, as measured along the main portion of the carcass ply of the tire. No bead apex or filler is present between the carcass turnup and the main portion of the carcass ply. A toe guard associated with each bead has each end (first and second) of the toe guard being disposed directly adjacent to the carcass ply. One (the first) end is located on the axially inner side of the main portion of the carcass ply at a location 10 mm to 89 mm radially outward of the bead core as measured along the main portion of the carcass ply. The other, or second, end of the toe guard is located at a point ranging from substantially the axially outermost point of the bead core to a location 89 mm radially outward of the bead core as measured along the turnup portion of the carcass ply. The first end and the second end of the toe guard is a shorter radial distance from said bead core than the end point of the turnup radial portion of the carcass ply. The respective turnup portion of the carcass ply is directly adjacent to both the toe guard and the bead core.

### Summary of the Invention

The invention relates to a tire in accordance with claim 1.

Dependent claims refer to preferred embodiments of the invention.

A pneumatic tire in accordance with a preferred aspect of the present invention includes a pair of axially spaced apart annular bead cores, each bead core comprising a plurality of metal wraps, each bead core having a radial cross-sectional shape, and a single carcass ply reinforced with polyester cords, the single carcass ply being folded each bead core, the carcass ply having a main portion that extends between the bead cores and turnup portions that are folded around the bead cores, the polyester cords having a construction of 2000-2400 Dtex/1/2 8-10/8-10 tpi (turns per 2.54 cm) and 20-30 epi (ends per 2.54 cm).

According to another preferred aspect of the invention, the polyester cords have a construction of 2200 Dtex/1/2 8.5/8.5 tpi and 26 epi.

According to still another preferred aspect of the pneumatic tire, an apex may stiffen the areas adjacent the bead cores.

According to yet another preferred aspect of the pneumatic tire, a chipper may stiffen the areas adjacent the bead cores.

According to still another preferred aspect of the pneumatic tire, a flipper may stiffen the areas adjacent the bead cores.

According to yet another preferred aspect of the pneumatic tire, the bead cord has a radial cross-sectional shape selected from the group consisting of substantially pentagonal, hexagonal, rectangular, triangular and circular.

According to still another preferred aspect of the pneumatic tire, the turnup portions are in contact with the main portion and extend to an end point 12.7 mm 88.9 mm radially outward of the bead core, as measured along the main portion of the single carcass ply.

According to yet another preferred aspect of the pneumatic tire, a toe guard is disposed on an axially inner side of the main portion of the single carcass ply at a location 10.16 mm to 50.8 mm radially outward of the bead core.

According to still another preferred aspect of the pneumatic tire, an end of the toe guard is disposed at a point ranging from substantially the axially outermost point of the bead core to a location 50.8 mm radially outward of the bead core as measured along the turnup portion of the single carcass ply.

### Brief Description of the Drawings

The invention will be described by way of example and with reference to the accompanying drawings in which:
Figure 1 is a partial schematic cross-sectional view of a pneumatic tire in accordance with the present invention; and
Figure 2 is a schematic cross-sectional view of the bead portion of the pneumatic tire of Figure 1 mounted upon a rim.

### Definitions

The following definitions are controlling for the present invention.

"Apex" means an elastomeric filler located radially above the bead core and between the plies and the turnup ply.

"Annular" means formed like a ring.

"Axial" and "axially" are used herein to refer to lines or directions that are parallel to the axis of rotation of the tire.

"Bead" means that part of the tire comprising an annular tensile member and shaped with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Chipper" refers to a narrow band of fabric or steel cords located in the bead area whose function is to reinforce the bead area and stabilize the radially inwardmost part of the sidewall.

"Cord" means one of the reinforcement strands which the reinforcement structures of the tire comprise.

"Denier" means the weight in grams per 9000 meters (unit for expressing linear density). "Dtex" means the weight in grams per 10,000 meters.

"Fiber" is a unit of matter, either natural or man-made that forms the basic element of filaments. Characterized by having a length at least 100 times its diameter or width.

"Flipper" refers to a reinforcing fabric around the bead wire for strength and to tie the bead wire in the tire body.

"Inner" means toward the inside of the tire and "outer" means toward its exterior.

"LASE" is load at specified elongation.

"Lateral" means an axial direction.

"Ply" means a cord-reinforced rubber-coated layer.

"Radial" and "radially" are used to mean directions radially toward or away from the axis of rotation of the tire.

"Tenacity" is stress expressed as force per unit linear density of the unstrained specimen (gm/tex or gm/denier).

"Toe guard" refers to the circumferentially deployed elastomeric rim-contacting portion of the tire axially inward of each bead.

"Turnup end" means the portion of a carcass ply that turns upward (i.e., radially outward) from the beads which the ply is wrapped.

"Yarn" is a generic term for a continuous strand of textile fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

### Detailed Description of Example of the Present Invention

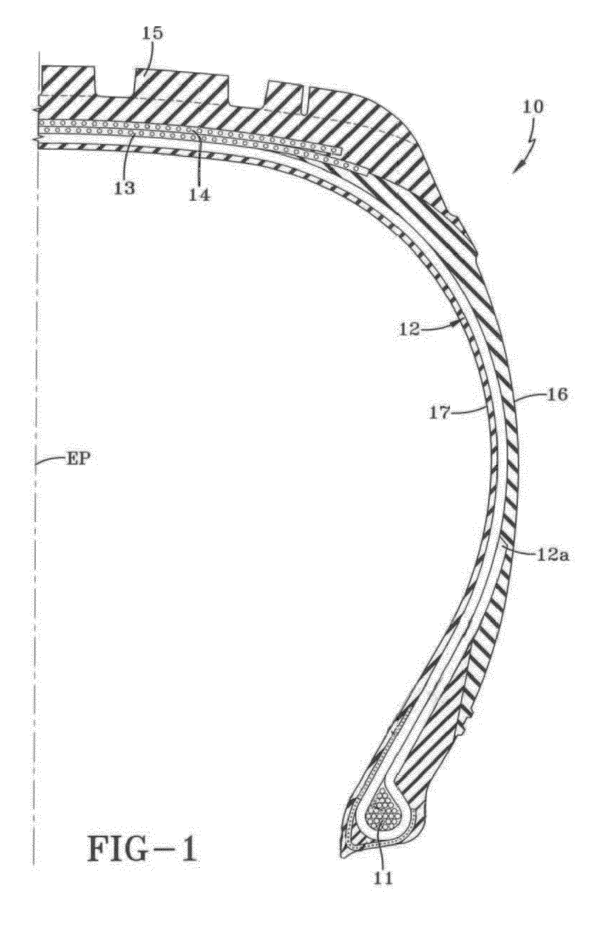

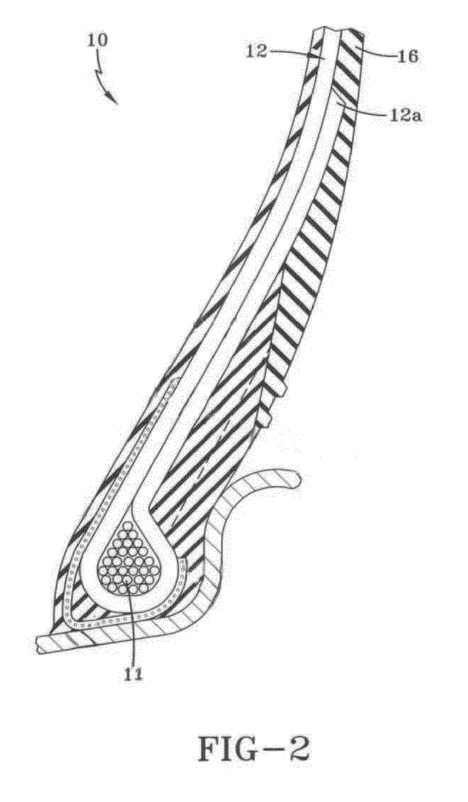

Referring now to Figures 1 and 2, there is shown a cross-sectional view of a pneumatic tire 10 for use with the present invention and an enlarged fragmentary view of a bead portion and lower sidewall of the pneumatic tire 10 mounted upon a rim.

The pneumatic tire 10 may have a pair of bead cores 11 (only one shown), each comprising a plurality of metallic filaments. The pneumatic tire 10 has only a single carcass ply 12 extending between the bead cores 11 and having turnup portions 12a anchored around each bead core 11. A belt structure may be provided having for instance at least two belts 13, 14 disposed radially outward of the main portion of the carcass ply 12 and a ground engaging tread portion 15 disposed radially outward of the belt structure. Sidewall portions 16 (one shown) extend radially inward from the tread portion 15 to the bead portions. On the axially inner side of the carcass ply 12, an air-impermeable innerliner 17 may be used. The innerliner 17 may have a layer or layers of elastomer or other material that form an inside surface of the pneumatic tire 10 and contain the inflating fluid or air within the pneumatic tire. Additional barriers, reinforcement strips, or gum strips (not shown) may be placed at suitable locations between the innerliner 17 and the main portion of the carcass ply 12 to avoid penetration of rubber through the carcass ply, especially during curing of the pneumatic tire 10.

In accordance with the present invention, the pneumatic tire 10 has a single ply carcass construction (e.g., monopoly) reinforced with parallel polyester cords. The carcass reinforcing ply 12 includes polyester cord of the construction 2000-2400 Dtex/1/2 8-10/8-10 turns per 2.54cm (tpi) and between 20 and 30 ends per 2.54 cm (epi). This polyester cord construction is a high tenacity construction and demonstrates improved tenacity, modulus, and fatigue properties over conventional monopoly polyester cord constructions. One example polyester construction is 2200 Dtex/1/2 8.5/8.5 tpi and 26 epi. Such a 1/2 polyester cord construction has a single polyester core yarn and two polyester yarns wrapped about the core yarn. The core yarn and the wrap yarns preferably each have the same number of turns per 2.54 cm in a range of from 7 to 10 or from 8 to 9 such as 8.5. The number of ends per 2.54 cm of the polyester cord in the carcass ply is preferably in a range of from 20 to 32 or from 24 to 28 such as 26. The Dtex of the polyester cord is preferably in a range of from 2100 to 2300 such as 2200.

There are SUV/MPV tires available including two plies of 1100/1/2 polyester or 1670/1/2 polyester. However, current monoply constructions with polyester materials have been unable to meet design and performance requirements. In accordance with the invention, a polyester yarn with preferably at least 4% higher tenacity may be combined with a construction of 2200/1/2, 8.5x8.5 tpi, 26 epi and additional stiffness in the lower sidewall and bead area (e.g., apex, chipper, flipper, and/or insert) may be achieved. Additionally, tire weight and cost can be reduced while still improving or maintaining production efficiency and manufacturability.

Further, the high tenacity polyester monopoly construction in accordance with the invention provides an improved alternative to current rayon carcass ply constructions because the polyester construction has equivalent functional properties at a lower cost and rolling resistance compared to rayon. The high tenacity polyester construction may also help to improve mileage and durability while maintaining the benefits of such high linear density constructions.

In order to facilitate high temperature interfacial strength (i.e., between the surface of the polyester cord(s) and an adhesive or elastomer), the surface reactivity of the polyester filaments may be increased. For example, to achieve this, a high epoxy content spin finish/coating may be used as a thermal barrier to degradation. Alternatively, the polyester filaments may be dipped in an adhesive with a high epoxy content. Below are two tables comparing an exemplary high twist 8/8 polyester construction with two other polyester constructions. The high tenacity polyester cord construction of the present invention has improved fatigue properties even over the exemplary 8/8 twist cord of the below tables.

The direction of twist refers to the direction of slope of the spirals of a filament, yarn, or cord when it is held vertically. If the slope of the spirals conform in direction to the slope of the letter "S", then the twist is called "S" or "left hand". If the slope of the spirals conform in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "Dtex" is understood to mean the weight in grams of 10,000 meters of a yarn before the yarn has a twist imparted thereto. In accordance with the invention, the cord twist is preferably equal to the yarn twist, i. e. in a range of from 7 to 10 or 8 to 9 such as 8.5. The direction of the twist may be Z or S, i.e. the construction may 1 (Z)/2(S) or 1 (S)/2(Z) for instance.

**Table 1**

| **Material** | **PET** | **PET** | **PET** |
|---|---|---|---|
| Dtex | 2200 | 2200 | 2200 |
| Construction | 2 | 2 | 2 |
| Twist Z | 4.5 | 6 | 8 |
| Twist S | 4.5 | 6 | 8 |

| **Fatigue test #1:** | | | |
|---|---|---|---|
| Brk. Strength Original (N) | 266.3 | 309.3 | 283.7 |
| Brk. Strength After 8 h (N) | 151.9 | 163.4 | 207.6 |
| Brk. Strength Retained (%) | 57.0 | 52.8 | 73.2 |

| **Fatigue test #2:** | | | |
|---|---|---|---|
| Brk. Strength Original (N) | 306.3 | 305.4 | 290.6 |
| Brk. Strength After 8 h (N) | 0 | 107.4 | 271.8 |
| Brk. Strength After 24 h (N) | 0 | 0 | 255.3 |
| Brk. Strength Retained (%) | 0 | 35.2 | 93.5 |
| Brk. Strength Retained (%) | 0 | 0 | 87.9 |

**Table 2**

| **Material** | **PET** | **PET** | **PET** |
|---|---|---|---|
| Dtex | 2200 | 2200 | 2200 |
| Construction | 2 | 2 | 2 |
| Twist Z | 4.5 | 6 | 8 |
| Twist S | 4.5 | 6 | 8 |
| | | | |
| Breaking Strength (N) | 311.1 | 301.7 | 277.4 |
| Elongation at break (%) | 15.4 | 15.6 | 15.6 |
| Lase @ 5% (N) | 93.1 | 88.3 | 80.5 |
| Work of Rupture (Nm) | 6.1 | 5.9 | 5.3 |
| Dry Tenacity (cN/tex) | 58 | 55 | 49 |
| Total Shrinkage (%) | 1.1 | 1.3 | 1.6 |
| Permanent Shrink. (%) | 1.1 | 1.1 | 1.3 |
| Linear Density cond. (Dtex) | 5346.1 | 5473.1 | 5698.7 |
| Linear Density dry (Dtex) | 5322.4 | 5448.1 | 5671.5 |
| Gauge | 0.740 | 0.790 | 0.800 |
| | | | |
| Cable Twist Direction | S | S | S |
| Cable Twist (tpi) | 4.49 | 5.87 | 7.87 |
| Ply Twist Direction | Z | Z | Z |
| Ply Twist (tpi) | 4.50 | 6.12 | 8.78 |

The carcass reinforcing ply 12 of the example tire 10 is typically a multiple cord-reinforced component where the cords are embedded in a rubber composition which is usually referred to as a ply coat. The ply coat rubber composition is conventionally applied by calendering the rubber onto the multiplicity of cords as they pass over, around, and through relatively large, heated, rotating, metal cylindrical rolls. Such ply components 12 of a tire 10, as well as the calendering method of applying the rubber composition ply coat, are known to those having skill in such art.

Cords of various compositions may be used for a carcass ply 12, such as, for example, but not intended to be limiting, polyester, rayon, aramid and nylon. Many such cords and their construction, whether monofilament or as twisted filaments, are known to those having skill in such art. In particular, polyester cords have been desirable for use in a monopoly 12 of SUV/MPV tires because of their excellent properties, such as improved rolling resistance, and relatively low cost. Further, treatment of polyester cords subsequent to twisting of the polyester yarns into cord provides for improved adhesion between the polyester and ply coat in a pneumatic tire 10.

The treatment of the polyester cords may comprise treating the cord after twist of the yarn with an aqueous emulsion comprising a polyepoxide, followed by treating the cord with an aqueous RFL emulsion comprising a resorcinol-formaldehyde resin, a styrene-butadiene copolymer latex, a vinylpyridine-styrene-butadiene terpolymer latex, and a blocked isocyanate. A polyester cord used in a carcass ply 12 may be made from any polyester fiber suitable for use in a tire. Polyester cord yarns are typically produced as multi-filament bundles by extrusion of the filaments from a polymer melt. Polyester cord is produced by drawing polyester fiber into yarns comprising a plurality of the filaments, followed by twisting a plurality of these yarns into a cord. Such yarns may be treated with a spin-finish to protect the filaments from fretting against each other and against machine equipment to ensure good mechanical properties.

In some cases, the yarn may be top-coated with a so-called adhesion activator prior to twisting the yarn into cord. The polyester may also be treated with an RFL (Resorcinol-Formaldehyde-Latex) dip after twisting the yarn into cord. The adhesion activator, typically comprising a polyepoxide, serves to improve adhesion of the polyester cord to rubber compounds after it is dipped with an RFL dip. Such dips are not robust against long and high temperature cures in compounds that contain traces of humidity and amines which attack the cord filament skin and degrade the adhesive/cord interface. The typical sign of failure is a nude polyester cord showing only traces of adhesive left on it.

The polyepoxide may also be added after the polyester yarns are twisted into cords. The twisted cords are dipped in an aqueous dispersion of a polyepoxide, also referred to herein as an epoxy or epoxy compound. The polyester cord may be formed from yarns that have been treated with sizing or adhesives prior to twist. Thus, cords made using the adhesive activated yarns (i.e., yarns treated with adhesive prior to twist) may be subsequently treated as well.

As a polyepoxide, use may be made of reaction products between an aliphatic polyalcohol, such as glycerine, propylene glycol, ethylene glycol, hexane triol, sorbitol, trimethylol propane, 3-methylpentanetriol, poly(ethylene glycol), poly(propylene glycol), etc. and a halohydrine, such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. The polyepoxide may be derived from an ortho-cresol formaldehyde novolac resin.

The polyepoxide may be used as an aqueous dispersion of a fine particle polyepoxide. The polyepoxide may be present in the aqueous dispersion in a concentration range of from 1 to 5 percent by weight. Alternatively, the polyepoxide may be present in the aqueous dispersion in a concentration range of from 1 to 3 percent by weight.

In a first treatment step, dry polyester cord may dipped in the aqueous polyepoxide dispersion. The cord may dipped for a time sufficient to allow a dip pick up, or DPU, of between 0.3 and 0.7 percent by weight of polyepoxide. Alternatively, the DPU is between 0.4 and 0.6 percent by weight. The DPU is defined as the dipped cord weight (after drying or curing of the dipped cord) minus the undipped cord weight, then divided by the undipped cord weight.

The polyester cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

In a second treatment step, the polyepoxide treated polyester cord may dipped in a modified RFL liquid. The adhesive composition may be comprised of (1) resorcinol, (2) formaldehyde and (3) a styrene-butadiene rubber latex, (4) a vinylpyridine-styrene-butadiene terpolymer latex, and (5) a blocked isocyanate. The resorcinol reacts with formaldehyde to produce a resorcinol-formaldehyde reaction product. This reaction product may be the result of a condensation reaction between a phenol group on the resorcinol and the aldehyde group on the formaldehyde. Resorcinol resoles and resorcinol-phenol resoles, whether formed in situ within the latex or formed separately in aqueous solution, may be considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin may be mixed with the styrene-butadiene latex and vinylpyridine-styrene-butadiene terpolymer latex. The resole or other mentioned condensation product or materials that form said condensation product should constitute from 5 to 40 parts and preferably around 10 to 28 parts by solids of the latex mixture. The condensation product forming the resole or resole type resin forming materials should preferably be partially reacted or reacted so as to be only partially soluble in water. Sufficient water is then preferably added to give around 12 percent to 18 percent by weight overall solids in the final dip. The weight ratio of the polymeric solids from the latex to the resorcinol/formaldehyde resin should be in a range of 2 to 6.

The RFL adhesive may also include a blocked isocyanate. 1 to 8 parts by weight of solids of blocked isocyanate may be added to the adhesive. The blocked isocyanate may be any suitable blocked isocyanate known to be used in RFL adhesive dips, including but not limited to caprolactam blocked methylene-bis-(4-phenylisocyanate), such as Grilbond-IL6 available from EMS American Grilon, Inc., and phenol formaldehyde blocked isocyanates.

As a blocked isocyanate, use may be made of reaction products between one or more isocyanates and one or more kinds of isocyanate blocking agents. The isocyanates may include monoisocyanates, such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc.

The isocyanate-blocking agents may include phenols, cresol, resorcinol, tertiary alcohols, such as t-butanol and t-pentanol, aromatic amines, such as diphenylamine, diphenylnaphthylamine and xylidine, ethyleneimines, such as ethylene imine and propyleneimine, imides, such as succinic acid imide, and phthalimide, lactams such as butyrolactam, ureas, such as urea and diethylene urea, oximes, such as acetoxime, cyclohexanoxime, benzophenon oxime, and .alpha.-pyrolidon.

Polymers may be added in the form of a latex or otherwise. A vinylpyridine-styrene-butadiene terpolymer latex and styrene-butadiene rubber latex may be added to the RFL adhesive. The vinylpyridiene-styrene-butadiene terpolymer may be present in the RFL adhesive such that the solids weight of the vinylpyridiene-styrene-butadiene terpolymer is from 50 percent to 100 percent of the solids weight of the styrene-butadiene rubber; in other words, the weight ratio of vinylpyridiene-styrene-butadiene terpolymer to styrene-butadiene rubber may be from 1 to 2.

The polymer latex is typically prepared and then the partially condensed condensation product is added. However, the ingredients (the resorcinol and formaldehyde) may be added to the polymer latex in the uncondensed form and the entire condensation may then take place in situ. The latex tends to keep longer and be more stable if it is kept at an alkaline pH level.

The polyepoxide treated cord may be dipped for one to three seconds in the RFL dip and dried at a temperature within the range of 120 degrees C to 265 degrees C for 0.5 to 4.0 minutes, and thereafter calendered into the rubber and cured therewith. The drying step utilized is typically carried out by passing the cord through 2 or more drying ovens which are maintained at progressively higher temperatures. For instance, the cord may be passed through a first drying oven which is maintained at a temperature of 121 degrees C to 149 degrees C and then passed through a second oven which is maintained at a temperature which is within the range of 177 degrees C to 260 degrees C.

It should be appreciated that these temperatures are oven temperatures rather than the temperature of the cord being dried. The cord will preferably have a total residence time in the drying ovens within the range of 1 minute to 5 minutes. For example, a residence time of 30 seconds to 90 seconds in the first oven and 30 seconds to 90 seconds in the second oven may be employed.

After treatment of the polyester cord in the polyepoxide and RFL, the treated cord is incorporated into a ply layer with a rubber ply coat compound. Conventional compounding ingredients may be used in the preparation of the ply coat rubber composition. The ply coat, in the finished tire may be sulfur cured as a component of the tire. For example, the sulfur cured ply coat rubber composition may contain conventional additives, including reinforcing agents, fillers, peptizing agents, pigments, stearic acids, accelerators, sulfur-vulcanizing agents, antiozonants, antioxidants, processing oils, activators, initiators, plasticizers, waxes, pre-vulcanization inhibitors, extender oils, etc. Representative of conventional accelerators may be, for example, amines, guanidines, thioureas, thiols, thiurams, sulfenamides, dithiocarbamates and xanthates, which are typically added in amounts of from 0.2 to 3.0 phr. Representative of sulfur-vulcanizing agents include element sulfur (free sulfur) or sulfur donating vulcanizing agents, for example, an amine disulfide, polymeric polysulfide or sulfur olefin adducts. The amount of sulfur-vulcanizing agent will vary depending on the type of rubber and particular type of sulfur-vulcanizing agent but generally range from 0.1 phr to 3 phr with a range of from 0.5 phr to 2 phr being preferred.

Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10.0 phr, with a range of from 2 to 6 phr being preferred. Amine based antidegradants, however, are not preferred.

Representative of a peptizing agent that may be used is pentachlorophenol which may be used in an amount ranging from 0.1 phr to 0.4 phr, with a range of from 0.2 to 0.3 phr being preferred. Representative of processing oils which may be used in the rubber composition include aliphatic, naphthenic, and aromatic oils. The processing oils may be used in a conventional amount ranging from 0 to 30 phr, with a range of from 5 to 15 phr being preferred.

Initiators are generally used in a conventional amount ranging from 1 to 4 phr, with a range of from 2 to 3 phr being preferred. Accelerators may be used in a conventional amount. In cases where only a primary accelerator is used, the amounts may range from 0.5 to 2.0 phr. In cases where combinations of two or more accelerators are used, the primary accelerator may generally be used in amounts ranging from 0.5 to 1.5 phr and a secondary accelerator may be used in amounts ranging from 0.1 to 0.5 phr.

Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

## Claims

1. A pneumatic tire comprising a pair of axially spaced apart annular bead cores (11) and having a single carcass ply (12), wherein the single carcass ply (12) is reinforced with polyester cords, the polyester cords having a Dtex in a range of from 2000 to 2400, a number of turns per 2.54 cm (tpi) in a range of from 7 to 10, a construction of 1/2, and a number of ends per 2.54 cm (epi) in a range of from 20 to 32.

2. The pneumatic tire of claim 1 wherein the Dtex is in a range of from 2100 to 2300.

3. The pneumatic tire of claim 1 or 2 wherein the number of ends per 2.54 cm is in a range of from 24 to 28.

4. The pneumatic tire of claim 1, 2 or 3 wherein and the number of turns per 2.54 cm is in a range of from 8 to 9.

5. The pneumatic tire of claim 1 wherein the Dtex is 2200, the number of ends per 2.54 cm is 26 and the number of turns per 2.54 cm is 8.5.

6. The pneumatic tire of claim 1 wherein the cord construction is 2000-2400 Dtex/1/2 8-10/8-10 tpi and 20-30 epi.

7. The pneumatic tire of claim 1 wherein the cord construction is 2200 Dtex/1/2 8.5 tpi/8.5 tpi and 26 epi.

8. The pneumatic tire of at least one of the previous claims wherein the single carcass ply (12) extends about each bead core (11) and has a main portion that extends between the bead cores (11) and turnup portions (12a) that are folded around the respective bead core (11).

9. The pneumatic tire of at least one of the previous claims wherein each bead core (11) comprises a plurality of metal wraps, each bead core (11) having a radial cross-sectional shape.

10. The pneumatic tire of at least one of the previous claims further including an apex for and/or a chipper.

11. The pneumatic tire of at least one of the previous claims further including a flipper.

12. The pneumatic tire of at least one of the previous claims wherein the bead core (11) has a radial cross-sectional shape selected from the group consisting of substantially pentagonal, hexagonal, triangular, rectangular, and circular.

13. The pneumatic tire of at least one of the previous claims wherein the turnup portions (12a) are in contact with the main portion and extend to an end point in a range of from 12.7 mm to 88.9 mm radially outward of the radially upper end of the bead core (11), as measured along the main portion of the single carcass ply (12).

14. The pneumatic tire of at least one of the previous claims further including a toe guard disposed on an axially inner side of the main portion of the single carcass ply (12) at a location 10.16 mm to 50.8 mm radially outward of the radially upper end of the bead core (11).

15. The pneumatic tire as set forth in claim 14 wherein an end of the toe guard is disposed at a point ranging from substantially the axially outermost point of the bead core to a location 50.8 mm radially outward of the radially upper end of the bead core (11) as measured along the turnup portion (12a) of the single carcass ply (12).
